# EUROPÄISCHE PATENTSCHRIFT

(11) **EP 2 807 713 B1**
(45) Veröffentlichungstag und Bekanntmachung des Hinweises auf die Patenterteilung: **11.05.2016**
(21) Anmeldenummer: 13702336.2
(22) Anmeldetag: 23.01.2013
(51) Int. Cl.: H02G 3/32

(54) **BEFESTIGUNGSSYSTEM**
FIXATION SYSTEM
SYSTEME DE FIXATION

(30) Priorität: 25.01.2012 DE 102012001408
(43) Veröffentlichungstag der Anmeldung: 03.12.2014
(73) Patentinhaber: HYDAC Accessories GmbH, 66280 Sulzbach/Saar (DE)
(72) Erfinder: BRABÄNDER, Wolfgang, 66424 Homburg (DE); CASPARI, Jochen, 66606 St. Wendel (DE); EVEN, Rainer, 66123 Saarbrücken (DE); YAGCI, Burhan, 66280 Sulzbach (DE)
(74) Vertreter: Bartels, Martin Erich Arthur
(86) Internationale Anmeldenummer: PCT/EP2013/000194
(87) Internationale Veröffentlichungsnummer: WO 2013/110454

(56) Entgegenhaltungen:
- EP-A2- 0 446 683
- WO-A1-00/79660
- DE-A1-102011 076 940

## Beschreibung

Die Erfindung betrifft ein Befestigungssystem für strangförmige Funktionselemente mit den Merkmalen im Oberbegriff von Anspruch 1.

Bei üblichen Windkraftanlagen kann das auf dem Turm drehbar angeordnete Maschinenhaus, das Generatoreinrichtungen mit den zugehörigen Aggregaten enthält, im Betrieb bis zu drei Umdrehungen ausführen, bevor das Maschinenhaus zurückgesteuert wird. Strangförmige betriebliche Funktionselemente, wie Kabel zur Abfuhr erzeugter Energien sowie zur Steuerung, Betriebsüberwachung, Kommunikation und dergleichen sowie Schlauchleitungen und dergleichen, die durch den Turm ins Maschinenhaus führen, müssen daher insbesondere in dem aus dem Maschinenhaus in den Turm hängenden Bereich in geordneter Weise positioniert und fixiert werden. Um die Betriebssicherheit zu gewährleisten, müssen die Kabel und dergleichen in der in den Turm hängenden Schlaufe derart auf Distanz gehalten werden, dass sie bei Drehbewegungen nicht aneinander scheuern. Bei der bei modernen Windkraftanlagen gegebenen größeren Anzahl von strangförmigen Funktionselementen, die in den Strangdurchführungen eines betreffenden Grundkörpers aufzunehmen sind, ergeben sich für die in Frage kommenden Grundkörper beträchtliche Abmessungen. Hieraus resultieren regelmäßig bei den in Frage kommenden Fertigungsverfahren wie Pressformen oder Spritzgießen aus Kunststoffen oder Metalllegierungen, hohe Herstellungskosten für die Fertigung entsprechend großformatiger Bauteile.

Die DE 10 2011 076 940 A1 entspricht den Oberbegriff des Anspruchs 1 und beschreibt einen Turm für eine Windturbine mit einer Kabelführung für in dem Turm verlaufende, strangförmige Funktionselemente, wie Kabel oder Leitungen. Die Kabelführung umfasst mehrere Befestigungssysteme in der Art von Bündelungsvorrichtungen, mit einem Grundkörper, der Strangdurchführungen aufweist, die durch Aufnahmeräume gebildet sind, die zum Einlegen der Funktionselemente eine durch eine Abdeckeinrichtung in der Art von Einsätzen verschließbare Öffnung besitzen. Hierdurch werden für die jeweilige Öffnung von außen zum inneren Ende des jeweiligen Aufnahmeraumes verlaufende Aufnahmeachsen definiert. Der Grundkörper eines jeweiligen Befestigungssystems ist aus zwei in der Art von Gleichteilen gebildeten Trägern oder Sektorelementen gebildet, wobei die jeweiligen Sektorelemente Strangdurchführungen aufweisen und an zumindest einer, vorzugsweise zwei sich gegenüberliegenden Verbindungsstellen miteinander koppelbar sind. Die Aufnahmeachsen der jeweiligen Strangdurchführungen eines jeden Grundkörpers divergieren nach außen hin. Das bekannte Befestigungssystem lässt noch Wünsche in Bezug auf eine einfache Konstruktion und somit kostengünstige Fertigung offen.

Im Hinblick auf diese Problematik stellt sich die Erfindung die Aufgabe, ein Befestigungssystem der betrachteten Art zur Verfügung zu stellen, das eine kostengünstige Fertigung ermöglicht.

Erfindungsgemäß ist diese Aufgabe durch ein Befestigungssystem gelöst, das die Merkmale des Patentanspruchs 1 in seiner Gesamtheit aufweist.

Eine wesentliche Besonderheit der Erfindung besteht demgemäß darin, dass hinsichtlich der Koppelung der Sektorelemente die Anordnung so getroffen ist, dass zumindest eine Befestigungsstelle der Sektorelemente als ein eine relative Schwenkbewegung der Sektorelemente ermöglichendes Scharniergelenk ausgebildet ist. Zur Bildung des Grundkörpers sind dadurch Sektorelemente oder miteinander verbundene Gruppen von Sektorelementen derart aneinander anklappbar, dass zwischen ihnen ein zusätzlicher, im Inneren des Strangkörpers befindlicher, zusätzlicher, zentraler Aufnahmeraum entsteht, in dem ein zusätzliches Funktionselement verlegt werden kann.

Es ist ferner vorgesehen, dass der Grundkörper aus zumindest zwei Sektorelementen gebildet ist, die jeweils Strangdurchführungen aufweisen und an zumindest einer Verbindungsstelle miteinander koppelbar sind, wobei die Aufnahmeachsen von am Grundkörper aufeinanderfolgenden Strangdurchführungen nach außen hin divergieren. Dadurch, dass ein Grundkörper vorgesehen ist, der aus Sektorelementen zusammengesetzt ist, entfällt die Notwendigkeit, den Grundkörper in Form eines Bauteils größerer Abmessungen herzustellen, wie dies beim Stand der Technik ein großes Werkzeug und eine entsprechend große Spritzgussmaschine erforderlich macht. Stattdessen vereinfacht und verbilligt sich die Herstellung durch den Einsatz kleinerer Maschineneinheiten. Dadurch, dass außerdem die Aufnahmeachsen von am Grundkörper aufeinanderfolgenden Strangdurchführungen nach außen hin divergieren, ergibt sich für den Grundkörper eine gekrümmte Außenform, was gegenüber üblichen Befestigungssystemen mit flachen, leistenartigen Grundkörpern für eine Bildung von Strangbündeln, wie sie bei Windkraftanlagen aus dem Maschinenhaus in den Turm hängen, günstiger ist.

Insbesondere kann in vorteilhafter Weise der Grundkörper die Form eines Sternkörpers besitzen, an dem Strangdurchführungen entlang gedachter Bogenlinien mit außenliegender Öffnung angeordnet sind.

Bei einem derartigen Körper mit bogenförmigem Umfangsbereichen kann in vorteilhafter Weise die Abdeckeinrichtung, die die Öffnungen der Aufnahmeräume der Strangdurchführungen verschließt, als zusätzliches Element ein Spannband aufweisen, das den Strangkörper umfasst und eine Sicherung gegen im Betrieb möglicherweise auftretende Kurzschlusskräfte bildet.

Für den Aufbau des Sternkörpers kann die Anordnung so getroffen sein, dass zumindest zwei der Sektorelemente gleich ausgebildet sind, beispielsweise indem der gesamte Sternkörper aus zwei als Gleichteile gestalteten Sektorelementen besteht.

Alternativ kann ein aus mehr als zwei Sektorelementen gebildeter Sternkörper vorgesehen sein, bei dem sämtliche Sektorelemente gleich ausgebildet sind.

In vorteilhafter Weise können die Strangdurchführungen der Sektorelemente Aufnahmeräume in Form von trogartigen Mulden aufweisen, wobei die Abdeckeinrichtung Haltekörper aufweist, die zur Vorfixierung von in die Strangdurchführungen eingelegten Funktionselementen an der Öffnung der jeweiligen Aufnahmeräume mit dem betreffenden Sektorelement verrastbar sind. Dies erleichtert den Montagevorgang, indem Funktionselemente nacheinander bequem in die Strangdurchführungen eingelegt werden können und dort gegen ein Herausfallen gesichert sind, bevor der Fixiervorgang endgültig abgeschlossen wird, beispielsweise mittels des die Haltekörper umspannenden Spannbandes.

Bei besonders vorteilhaften Ausführungsbeispielen sind die Sektorelemente in Form von Quadranten gestaltet, die zu einem Sternkörper vereinigbar sind, bei dem die Öffnungen der Aufnahmeräume auf einer entlang des Außenumfanges des Strangkörpers verlaufenden Kreislinie gelegen sind. Die Aufnahmeräume können an ihrer von der Öffnung der Strangdurchführungen abgewandten Innenseite durch eine entlang eines Viertelkreises verlaufende Wand begrenzt sein, so dass sie in dem gebildeten Sternkörper eine runde Zentralöffnung begrenzen, die den Aufnahmeraum für das Verlegen eines zusätzlichen Funktionselementes bildet.

In besonders vorteilhafter Weise kann hierbei die Anordnung so getroffen sein, dass zur Bildung einer Zusatz-Strangdurchführung ein in der Zentralöffnung aufnehmbarer Inneneinsatz vorgesehen ist, der die zumindest eine zusätzliche Strangdurchführung oder möglicherweise eine oder mehrere weitere zusätzliche Strangdurchführungen bildet.

Nachstehend ist die Erfindung anhand von in der Zeichnung dargestellten Ausführungsbeispielen im Einzelnen erläutert. Es zeigen:
- Fig. 1: eine Seitenansicht eines Ausführungsbeispiels des erfindungsgemäßen Befestigungssystems, wobei in zwei Strangdurchführungen jeweils ein Bündel aus drei Kabeln eingelegt ist;
- Fig. 2: eine Teildarstellung des Ausführungsbeispiels, wobei vier Quadranten, die den als Sternkörper gestalteten Grundkörper bilden, zu einem Paar von Sektorelementen vereinigt sind, die an einer scharnierartigen Gelenkstelle auseinandergeklappt dargestellt sind;
- Fig. 3: eine in etwas größerem Maßstab gezeichnete Seitenansicht eines einzelnen Quadranten;
- Fig. 4: eine perspektivische Seitenansicht des in Fig. 3 gezeigten Quadranten;
- Fig. 5: eine Seitenansicht eines zweiten Ausführungsbeispiels des erfindungsgemäßen Befestigungssystems ohne in die Strangdurchführungen eingelegte strangförmige Funktionselemente;
- Fig. 6: eine perspektivische Seitenansicht des Ausführungsbeispiels von Fig. 5;
- Fig. 7: eine gegenüber Fig. 5 in etwas kleinerem Maßstab und auseinandergezogen gezeichnete Seitenansicht der Sektorelemente von Fig. 5 und zweier zwischen den Sektorelementen anbringbarer Zusatzelemente;
- Fig. 8: eine Seitenansicht der zu einem Sternkörper gemäß einem dritten Ausführungsbeispiel vereinigten Sektorelemente und der Zusatzelemente von Fig. 7; und
- Fig. 9: eine der Fig. 1 entsprechende Seitenansicht des ersten Ausführungsbeispiels, wobei in der Zentralöffnung des Sternkörpers ein Inneneinsatz aufgenommen ist.

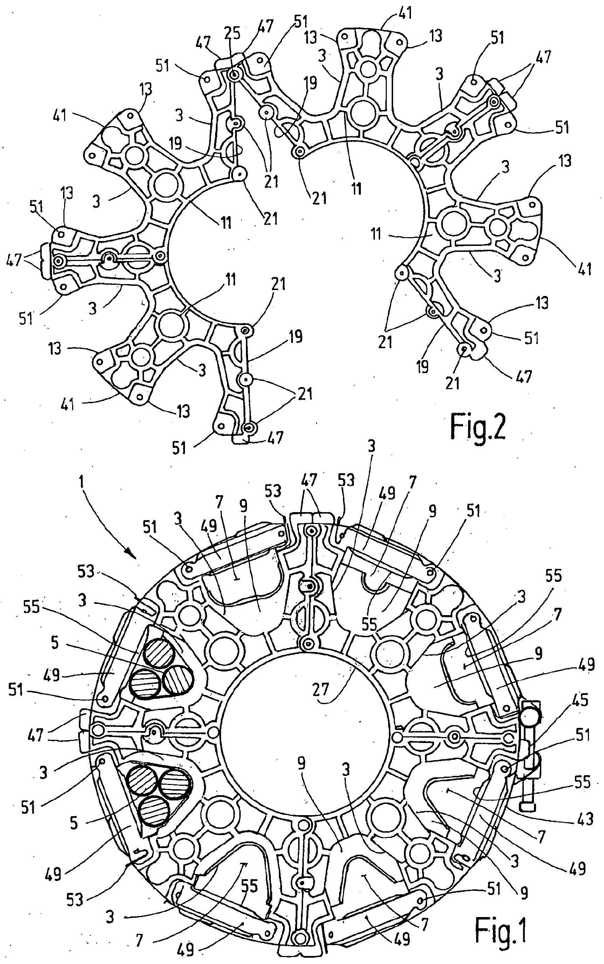

In Fig. 1, die ein erstes Ausführungsbeispiel der Erfindung zur Gänze zeigt, ist ein Grundkörper in Form eines Sternkörpers 1 vorgesehen, entlang von dessen Umfangsbereich Strangdurchführungen 3 in Form trogartiger Mulden gebildet sind, in die strangartige Funktionselemente, die zu befestigen sind, einlegbar sind. In Fig. 1 sind beispielhaft lediglich in zwei Strangdurchführungen 3 eingelegte Funktionselemente gezeigt, bei denen es sich jeweils um ein aus drei Kabeln bestehendes Kabelbündel 5 handelt, die in den in den Strangdurchführungen 3 gebildeten Aufnahmeraum 7 eingelegt sind. Wie Fig. 1 verdeutlicht, sind in einige der Strangdurchführungen 3 Adaptereinsätze 9 eingesetzt, um die Fixierung von Funktionselementen unterschiedlicher Form und Abmessung zu ermöglichen, indem die Form und Abmessung des jeweiligen Aufnahmeraums 7 den Erfordernissen angepasst wird.

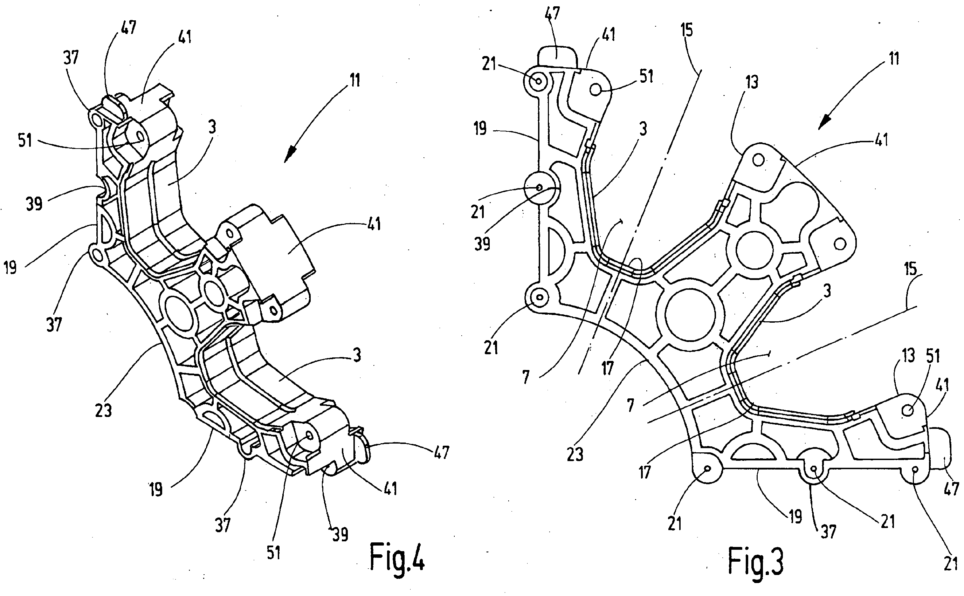

Die Fig. 2 bis 4 zeigen nähere Einzelheiten der als sog. Gleichteile gebildeten Sektorelemente 11, die zum Sternkörper 1 vereinigbar sind. Beim vorliegenden Beispiel sind vier Sektorelemente 11 vorgesehen, deren jedes zwei Strangdurchführungen 3 in Form trogartiger Mulden mit außenliegender Öffnung 13 aufweist. Die Sektorelemente 11 sind als Quadranten des im vorliegenden Fall runden Sternkörpers 1 bogenförmig gestaltet. Die durch die Aufnahmeräume 7 definierten Aufnahmeachsen 15, die sich von der äußeren Öffnung 13 zum inneren Ende 17 der Strangdurchführungen 3 erstrecken, s. Fig. 3, divergieren zur Außenseite des Sektorelements 11 hin. Seitlich sind die Sektorelemente 11 durch sich in Radialebenen erstreckende Wände 19 begrenzt, an denen die Sektorelemente 11 über Verbindungsstellen 21 miteinander koppelbar sind. An der von den Öffnungen 13 der Strangdurchführungen 3 abgewandten Innenseite sind die Sektorelemente 11 durch eine entlang eines Viertelkreises verlaufende Wand 23 begrenzt. Fig. 2 zeigt, dass je zwei Sektorelemente 11 an den Verbindungsstellen 21 zu einem Paar aus zwei Quadranten verbunden sind und beide Paare an einer als Scharniergelenk 25 ausgebildeten Verbindungsstelle schwenkbar miteinander verbunden sind.

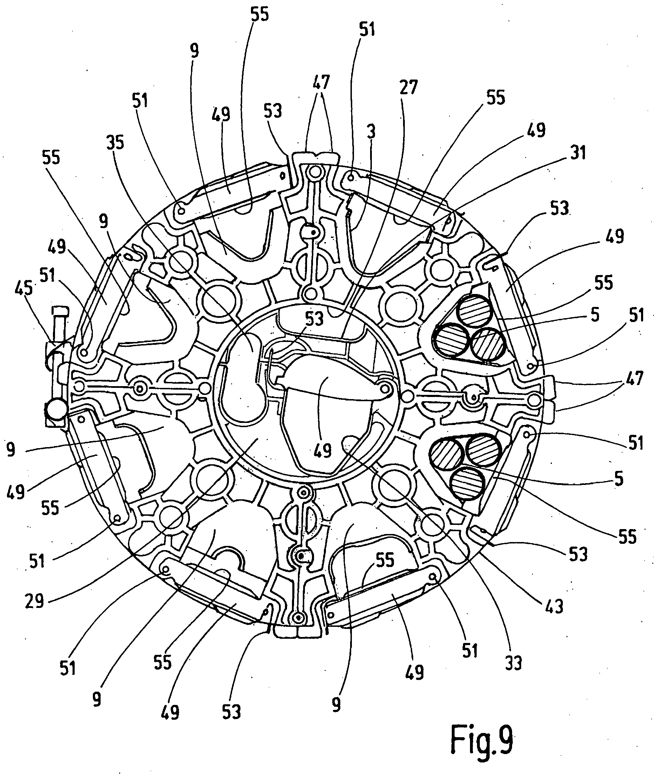

Wenn die Quadrantenpaare aus der in Fig. 2 gezeigten gespreizten Schwenkstellung aneinandergeklappt und zum geschlossenen Sternkörper 1 verbunden sind, ist eine geschlossene Zentralöffnung 27 gebildet, in der ein Inneneinsatz 29 aufnehmbar und durch Zusammenklappen der Quadrantenpaare darin sicherbar ist. Wie Fig. 9 zeigt, kann ein derartiger Inneneinsatz 29 zusätzliche Strangdurchführungen 31, 33, 35 bilden, so dass zusätzliche, strangförmige Funktionselemente durch die Zentralöffnung 27 hindurch verlegt werden können.

Wie insbesondere aus Fig. 4 zu ersehen ist, sind die Verbindungsstellen 21 derart ausgebildet, dass an den Wänden 19 Erhebungen 37 und Vertiefungen 39 gebildet sind, die abwechselnd so angeordnet sind, dass sich im montierten Zustand ein Formschluss ergibt, der eine Art Verzahnung bildet, die Kräfte aufnehmen kann. Die an die Öffnungen 13 der Strangführungen 3 anschließenden äußeren Oberflächen 41 weisen eine einer Kreisbogenlinie entsprechende Wölbung für ein den Sternkörper 1 umschlingendes Spannband 43 auf, das mittels eines Spannschlosses 45 spannbar ist. Zur seitlichen Führung des Spannbandes 43 befinden sich in der Nähe der Wände 19 aus der Oberfläche 41 vorspringende Lappen 47.

Für den Verschluss der Öffnungen 13 der Strangdurchführungen 3 ist jeweils ein Haltekörper 49 vorgesehen, der mit einer in der Zeichnung nicht sichtbaren Gelenkgabel an einer Schwenkstelle 51 an der Öffnung 13 der betreffenden Strangdurchführung 3 so angelenkt ist, dass sie aus einer die Öffnung 13 freigebenden Schwenkstellung in die in Fig. 1 und 9 gezeigte Stellung schwenkbar sind, in der sie die Strangdurchführung 3 verschließen. Diese Haltekörper 49 weisen Rastzungen 53 (die in Fig. 1 und 9 lediglich teilweise beziffert sind) auf, mit denen die Haltekörper 49 in der Schließstellung verrastbar sind, so dass eine Vorfixierung von in die Strangdurchführungen 3 eingelegter Funktionselemente erfolgt, bevor das Spannband 43 über die Oberseite der Haltekörper 49 gespannt wird. Die Haltekörper 49 weisen federbelastete bewegliche Druckkörper 55 auf, die in Fig. 1 und 9 nur teilweise beziffert sind und auf in den Strangdurchführungen 3 eingelegte Funktionselemente wie Kabel oder Kabelbündel 5 eine Haltekraft ausüben. Dadurch ist ein Befestigungssystem realisiert, bei dem die jeweiligen Sternkörper 1 in der Art eines Distanzhalters für eine aus dem Maschinenhaus in den Turm hängende Schlaufe aus Kabeln und /oder Leitungen als Schlaufenbildner dienen, der bei Drehbewegungen das Scheuern der Kabel oder Leitungen verhindert. Im Übrigen können mit dem Befestigungssystem auch innerhalb des segmentartigen Turmaufbaus die Kabel oder Leitungen sicher geführt und festgelegt werden, was eine enorme Erleichterung beim Aufbau dahingehender Türme darstellt.

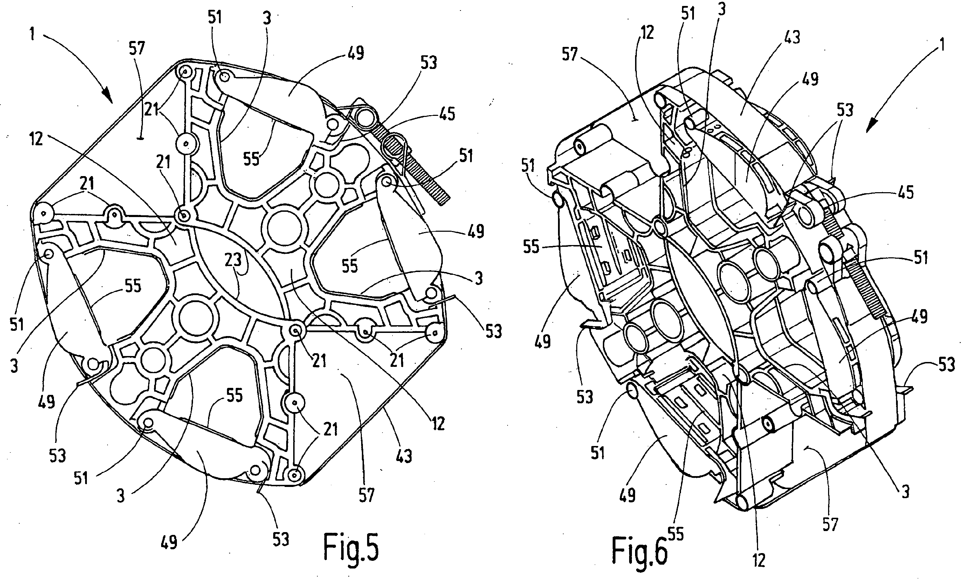

Die Fig. 5 und 6 zeigen ein Ausführungsbeispiel, bei dem der Sternkörper 1 aus zwei gleich ausgebildeten Sektorelementen 12 gebildet ist, die jeweils zwei Strangdurchführungen 3 aufweisen, die, wie auch die übrigen Komponenten dieser Sektorelemente 12, in gleicher Weise gestaltet sind wie bei den Sektorelementen 11 des vorherigen Beispiels. Der Unterschied besteht jedoch insoweit darin, dass die Sektorelemente 12, anders als bei den Quadranten des vorherigen Beispiels, wenn sie miteinander gekoppelt sind, keine vollständige Sternform bilden, sondern dass zwischen den Sektorelementen 12 Freiräume 57 gebildet sind. Die Verbindung der Sektorelemente 12 erfolgt an Verbindungsstellen 21, die wie beim ersten Ausführungsbeispiel gestaltet sind, mittels in den Werkstoff der Sektorelemente 12 eingeschraubten Schrauben, wie dies auch beim ersten Ausführungsbeispiel der Fall ist, wobei bei dem zweiten Ausführungsbeispiel von Fig. 5 und 6 lediglich die an die innere Wand 23 angrenzenden Verbindungsstellen 21 benutzt werden. Wie beim ersten Ausführungsbeispiel sind an den Öffnungen der Strangdurchführungen 3 schwenkbare Haltekörper 49 angelenkt, die in der Schließstellung verrastbar sind, wobei, wie beim ersten Ausführungsbeispiel, ein Spannband 43 über die Oberseite der Haltekörper 49 geführt ist.

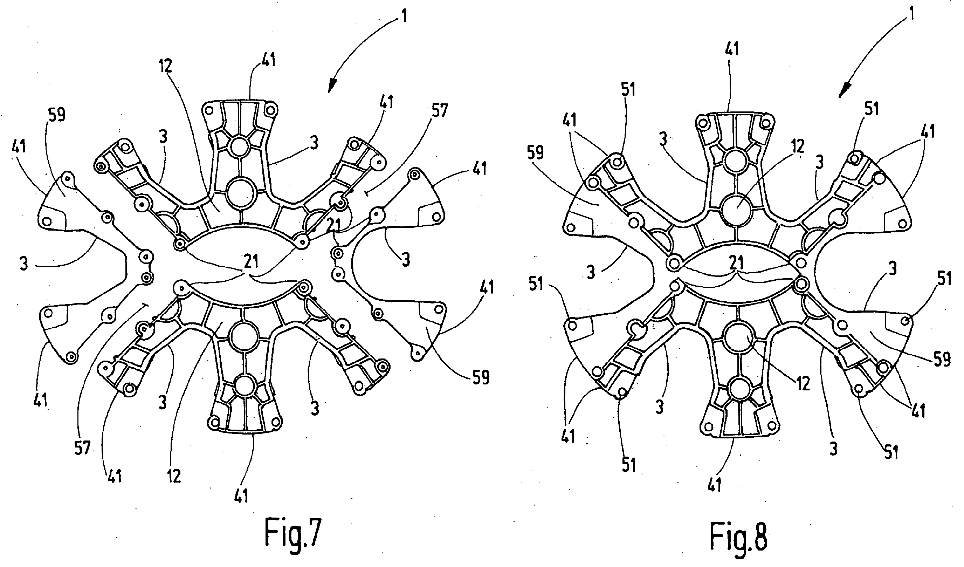

Die Fig. 7 und 8 verdeutlichen ein weiteres Ausführungsbeispiel in Form einer Weiterbildung des zuvor beschriebenen Beispiels gemäß Fig. 5 und 6, wobei zur Bildung zweier zusätzlicher Strangdurchführungen 3 Zusatzelemente 59 vorgesehen sind, die in die Freiräume 57 zwischen den Sektorelementen 12 einsetzbar und über die Verbindungsstellen 21 daran festlegbar sind. Jedes der Zusatzelemente 59 bildet eine Strangdurchführung 3 und zusammen mit den Sektorelementen 12 einen Sternkörper 1 mit leicht ovaler Außenkontur.

Mit den genannten Sektorelementen als Gleichbauteile ausgeführt lassen sich mithin verschiedene Anordnungen an Strangdurchführungen herstellen, beispielsweise eine solche nach den Fig. 1 und 2 oder eine solche nach den Fig. 5 und 6. Baut man die vorstehend beschriebenen Sektorelemente kleiner auf, so dass diese beispielsweise nur ein Bogensegment von 10° bis 45°, vorzugsweise von etwa 30° überdecken, kann man noch eine höhere Baukastenvarianz erreichen und mit einer Vielzahl an Sektorelementen unterschiedliche Festlegesysteme (nicht dargestellt) in der Art eines Baukastensystems realisieren.

## Patentansprüche

1. Befestigungssystem für strangförmige Funktionselemente (5) wie beispielsweise Kabel oder Leitungen, insbesondere bei Windkraftanlagen, mit einem Grundkörper (1), der Strangdurchführungen (3) aufweist, die durch Aufnahmeräume (7) gebildet sind, die zum Einlegen von Funktionselementen (5) eine durch eine Abdeckeinrichtung (49, 43) verschließbare Öffnung (13) besitzen und eine sich von der äußeren Öffnung (13) zum inneren Ende (17) des jeweiligen Aufnahmeraumes (7) verlaufende Aufnahmeachse (15) definieren, wobei der Grundkörper (1) aus zumindest zwei Sektorelementen (11, 12) gebildet ist, die jeweils Strangdurchführungen (3) aufweisen und an zumindest einer Verbindungsstelle (21) miteinander koppelbar sind, und wobei die Aufnahmeachsen (15) von am Grundkörper (1) aufeinanderfolgenden Strangdurchführungen (3) nach außen hin divergieren, **dadurch gekennzeichnet, dass** zumindest eine Befestigungsstelle (21) der Sektorelemente (11) als ein eine relative Schwenkbewegung der Sektorelemente (11) ermöglichendes Scharniergelenk (25) ausgebildet ist.

2. Befestigungssystem nach Anspruch 1, **dadurch gekennzeichnet, dass** der Grundkörper die Form eines Sternkörpers (1) besitzt, an dem die Strangdurchführungen (3) entlang gedachter Bogenlinien angeordnet sind.

3. Befestigungssystem nach Anspruch 1 oder 2, **dadurch gekennzeichnet, dass** die Abdeckeinrichtung ein den Sternkörper (1) umfassendes Spannband (43) aufweist.

4. Befestigungssystem nach einem der vorstehenden Ansprüche, **dadurch gekennzeichnet, dass** zumindest zwei der Sektorelemente (11, 12) gleich ausgebildet sind.

5. Befestigungssystem nach einem der vorstehenden Ansprüche, **dadurch gekennzeichnet, dass** sämtliche Sektorelemente (11, 12) gleich ausgebildet sind.

6. Befestigungssystem nach einem der vorstehenden Ansprüche, **dadurch gekennzeichnet, dass** die Strangdurchführungen (3) der Sektorelemente (11, 12) Aufnahmeräume (7) in Form von trogartigen Mulden aufweisen und dass die Abdeckeinrichtung Haltekörper (49) aufweist, die zur Vorfixierung von in die Strangdurchführungen (3) eingelegten Funktionselementen (5) an der Öffnung (13) der jewieligen Aufnahmeräume mit dem betreffenden Sektorelement (11, 12) verrastbar sind.

7. Befestigungssystem nach einem der vorstehenden Ansprüche, **dadurch gekennzeichnet, dass** Sektorelemente in Form von Quadranten (11) gestaltet sind, die zu einem Sternkörper (1) vereinigbar sind, bei dem die Öffnungen (13) der Aufnahmeräume (7) auf einer entlang des Außenumfanges des Sternkörpers (1) verlaufenden Kreislinie gelegen sind.

8. Befestigungssystem nach einem der vorstehenden Ansprüche, **dadurch gekennzeichnet, dass** die Quadranten (11) an entlang von Radialebenen verlaufenden, die Aufnahmeräume (7) seitlich begrenzenden Wänden (19) über Verbindungsstellen (21) miteinander koppelbar sind.

9. Befestigungssystem nach einem der vorstehenden Ansprüche, **dadurch gekennzeichnet, dass** die Quadranten (11) an der von der Öffnung (13) der Strangdurchführungen (3) abgewandten Innenseite durch eine entlang eines Viertelkreises verlaufende Wand (23) begrenzt sind, die in dem gebildeten Sternkörper (1) eine runde Zentralöffnung (27) begrenzen.

10. Befestigungssystem nach einem der vorstehenden Ansprüche, **dadurch gekennzeichnet, dass** ein in der Zentralöffnung (27) aufnehmbarer Inneneinsatz (29) vorgesehen ist, der zumindest eine zusätzliche Strangdurchführung (3) aufweist.

11. Befestigungssystem nach einem der vorstehenden Ansprüche, **dadurch gekennzeichnet, dass** Sektorelemente (12) derart koppelbar sind, dass zwischen benachbarten Sektorelementen (12) Freistellen (57) gebildet sind, in denen Zusatzelemente (59) aufnehmbar sind, die zumindest eine zusätzliche Strangdurchführung (3) aufweisen.

## Claims

1. A mounting system for strand-like functional elements (5) such as, for example, cables or lines, in particular for wind turbines, comprising a main body (1) that has strand passageways (3) that are formed by receiving spaces (7) which have an opening (13) for the insertion of functional elements (5) that can be closed by a cover device (49, 43) and which define a receiving axis (15) that runs from the outer opening (13) to the inner end (17) of the respective receiving space (7), the main body (1) being formed from at least two sectional elements (11, 12) which each have strand passageways (3) and can be coupled to one another at at least one junction point (21), and the receiving axes (15) of successive strand passageways (3) on the main body (1) diverging outward, **characterised in that** at least one attachment point (21) of the sectional elements (11) is formed as a hinge joint (25) that makes a relative pivotal movement of the sectional elements (11) possible.

2. The mounting system according to Claim 1, **characterised in that** the main body is in the form of a star-shaped body (1) on which the strand passageways (3) are disposed along imaginary curved lines.

3. The mounting system according to Claim 1 or 2, **characterised in that** the cover device has a tension band (43) enclosing the star-shaped body (1).

4. The mounting system according to any of the preceding claims, **characterised in that** at least two of the sectional elements (11, 12) are identically formed.

5. The mounting system according to any of the preceding claims, **characterised in that** all of the sectional elements (11, 12) are identically formed.

6. The mounting system according to any of the preceding claims, **characterised in that** the strand passageways (3) of the sectional elements (11, 12) have receiving spaces (7) in the form of trough-like recesses, and that the cover device has holding members (49) which can be latched to the respective sectional element (11, 12) for the pre-fixing of functional elements (5) that are inserted into the strand passageways (3) at the opening (13) of the respective receiving spaces.

7. The mounting system according to any of the preceding claims, **characterised in that** sectional elements are designed in the form of quadrants (11) which can be combined to form a star-shaped body (1) in which the openings (13) of the receiving spaces (7) are located on a circular line that extends along the outer periphery of the star-shaped body (1).

8. The mounting system according to any of the preceding claims, **characterised in that** the quadrants (11) can be coupled to one another by means of junction points (21) along walls (19) which extend from radial planes, and which laterally define the receiving spaces (7).

9. The mounting system according to any of the preceding claims, **characterised in that** the quadrants (11) on the inside facing away from the opening (13) of the strand passageways (3) are delimited by a wall (23) which extends along a quarter-circle, said wall delimiting a round central opening (27) in the star-shaped body (1) that is formed.

10. The mounting system according to any of the preceding claims, **characterised in that** an inner insert (29) is provided that can be accommodated in the central opening (27), said inner insert having at least one additional strand passageway (3).

11. The mounting system according to any of the preceding claims, **characterised in that** sectional elements (12) can be coupled in such a way that free points (57) are formed between adjacent sectional elements (12), in which free points additional elements (59) can be accommodated which have at least one additional strand passageway (3).

## Revendications

1. Système de fixation d'éléments (5) fonctionnels en forme de cordon, comme par exemple des câbles ou des lignes, notamment dans des éoliennes, comprenant un corps (1) de base, qui a des traversées (3) pour des cordons formées par des chambres (7) de réception, qui, pour l'introduction d'éléments (5) fonctionnels, possèdent une ouverture (13) pouvant être fermée par un dispositif (49, 43) de recouvrement et définissent un axe (15) de réception s'étendant de l'ouverture (13) extérieure à l'extrémité (17) intérieure de la chambre (7) de réception respective, le corps (1) de base étant formé d'au moins deux secteurs (11, 12) ayant respectivement des traversées (3) pour un cordon et pouvant être accouplées entre eux en au moins un point (21) de liaison, et dans lequel les axes (15) de réception divergent vers l'extérieur de traversées (3) pour un cordon se succédant sur le corps (1) de base, **caractérisé en ce qu'**au moins un point (21) de fixation des secteurs (11) est constitué sous la forme d'une articulation (25) à charnière permettant un mouvement de pivotement relatif des secteurs (11).

2. Système de fixation suivant la revendication 1, **caractérisé en ce que** le corps de base a la forme d'un corps (1) en étoile, sur lequel les traversées (3) pour un cordon sont disposées suivant des lignes d'arc imaginaires.

3. Système de fixation suivant la revendication 1 ou 2, **caractérisé en ce que** le dispositif de recouvrement a un collier (43) de serrage entourant le corps (1) en étoile.

4. Système de fixation suivant l'une des revendications précédentes, **caractérisé en ce qu'**au moins deux des secteurs (11, 12) sont constitués pareillement.

5. Système de fixation suivant l'une des revendications précédentes, **caractérisé en ce que** tous les secteurs (11, 12) sont constitués pareillement.

6. Système de fixation suivant l'une des revendications précédentes, **caractérisé en ce que** les traversées (3) pour un cordon des secteurs (11, 12) ont des chambres (7) de réception sous la forme de cuvettes de type en auge et **en ce que** le dispositif de recouvrement a des pièces (49) de maintien, qui, pour l'immobilisation préalable d'éléments (5) fonctionnels mis dans les traversées (3) pour un cordon, peuvent, sur l'ouverture (13) des chambres de réception respectives, être encliquetées avec le secteur (11, 12) concerné.

7. Système de fixation suivant l'une des revendications précédentes, **caractérisé en ce que** des secteurs sont conformés en forme de cadran (11), qui peuvent être réunis en un corps (1) en étoile, dans lequel les ouvertures (13) des chambres (7) de réception sont mises sur une ligne circulaire s'étendant suivant le pourtour extérieur du corps (1) en étoile.

8. Système de fixation suivant l'une des revendications précédentes, **caractérisé en ce que** les cadrans (11) peuvent être accouplés les uns aux autres par des points (21) de liaison sur des parois (19) s'étendant dans des plans radiaux et délimitant latéralement les chambres (7) de réception.

9. Système de fixation suivant l'une des revendications précédentes, **caractérisé en ce que** les cadrans (11) sont délimités du côté intérieur, éloigné de l'ouverture (13) des traversées (3) pour un cordon, par une paroi (23), qui s'étend suivant un quart de cercle, ces parois délimitant une ouverture (27) centrale circulaire dans le corps (1) en étoile qui est formé.

10. Système de fixation suivant l'une des revendications précédentes, **caractérisé en ce qu'**il est prévu un insert (29) intérieur, qui peut être reçu dans l'ouverture (27) centrale et qui a au moins une traversée (3) supplémentaire pour un cordon.

11. Système de fixation suivant l'une des revendications précédentes, **caractérisé en ce que** les secteurs (12) peuvent être accouplés de manière à former, entre des secteurs (12) voisins, des espaces (57) libres, dans lesquels des éléments (59) supplémentaires peuvent être reçus, éléments qui ont au moins une traversée (3) supplémentaire pour un cordon.
